# EUROPEAN PATENT APPLICATION

(11) **EP 4 092 150 A1**
(43) Date of publication of application: **23.11.2022**
(21) Application number: 21740843.4
(22) Date of filing: 08.01.2021
(51) Int. Cl.: C22C 38/00, C21C 7/04, C21C 7/06, C22C 38/28, C22C 38/60

(54) **FERRITIC STAINLESS STEEL**

(30) Priority: 15.01.2020 JP 2020004179
(71) Applicant: NIPPON STEEL Stainless Steel Corporation, Tokyo 100-0005 (JP)
(72) Inventor: FUKUMOTO, Shigeo, Tokyo 100-0005 (JP); SAKAIZAWA, Yuto, Tokyo 100-0005 (JP); KANEKO, Shigeru, Tokyo 100-8071 (JP); FUCHIGAMI, Katsuhiro, Tokyo 100-8071 (JP)
(74) Representative: Vossius & Partner Patentanwälte Rechtsanwälte mbB
(86) International application number: PCT/JP2021/000485
(87) International publication number: WO 2021/145279

(57) **Abstract**

A ferritic stainless steel with chemical composition includes, in mass%, Cr: 10.5 to 25.0%; Al: 0.01 to 0.20%; Ti: 0.15% to 0.35%; O: 0.0001 to 0.0030%; and Mg: 0.008 × [%AI] or more, in which oxysulfide-containing inclusions are present in the steel, a number ratio of the oxysulfide-containing inclusions whose minor axis is 3 µm or more is 5 pieces/mm² or less, and a number ratio of the oxysulfide-containing inclusions whose minor axis is 15 µm or more is 0.05 pieces/mm² or less. 75% or more of the inclusions whose minor axis is 3 µm or more have an oxysulfide part whose composition satisfies formulae (1) and (2),

CaO + Al₂O₃ + MgO ≥ 90% ··· formula (1),

Al₂O₃/MgO ≤ 1.25 ··· formula (2).

## Description

### TECHNICAL FIELD

The present invention relates to a ferritic stainless steel that is excellent in surface condition.

### BACKGROUND ART

Stainless steel, which contains high concentration of Cr and thus is low in oxygen potential in steel, is likely to produce non-metal inclusion therein in a form of MgO·Al₂O₃ spinel. Spinel is not easily crushed and/or flattened during the process of rolling and the like. Accordingly, spinel is exposed on the surface during the process to cause surface defects. Efforts for reducing the spinel inclusions have been known, which include controlling conditions during melt-production process.

For instance, Patent Literature 1 discloses that, by setting MgO concentration in the inclusions at 80 wt% or more, adhesion on the nozzle inner wall can be reduced and ferritic stainless steel that is capable of preventing nozzle clogging and is excellent in continuous castability can be provided. Further, it is disclosed in Patent Literature 1 that sliver defects caused by substances adhered on the nozzle inner wall can be prevented by this method.

Patent Literature 2 discloses that components of refined slag are suitably controlled on the basis of deoxidation by Al. Specifically, it is disclosed that, by keeping low concentration of SiO₂ in the slag to control an oxygen potential at a low level, MgO·Al₂O₃ spinel can be changed to harmless MgO.

In addition, Patent Literature 3 discloses that, by controlling basicity of the slag on the basis of Si deoxidation and reducing Al in the steel as low as possible, MgO·Al₂O₃ spinel can be restrained from being generated.

An object of Patent Literature 4 is to stably provide ferritic stainless steel that is excellent in ridging resistance while ensuring corrosion resistance. Further, based on the recognition that a proactive use of the inclusions (specifically, dispersing Mg-Al oxide (e.g. spinel (MgO·Al₂O₃)) and TiN in the molten steel) is useful in order to restrain the ridging, it is found that the state of presence of the complex inclusions, and composition and a composition ratio of the oxides contained in the complex inclusions affect the ridging resistance, thereby reaching the invention disclosed in

Patent Literature 4 that, as the composition of the oxides contained in the inclusions, it is satisfied that the ratio between Al₂O₃ and MgO (Al₂O₃/MgO) is 4 or less, CaO is 20% or less, and the sum of Al₂O₃ and MgO is 75% or more, complex inclusions with a long axis of 2 µm or more are present in the steel at a density of 2 pieces/mm² or more, and the number ratio between inclusions with a long axis of 1 µm or more satisfying the above oxide composition and inclusions with a long axis of 1 µm or more not satisfying the above oxide composition is 0.7 or more.

### CITATION LIST

### PATENT LITERATURE(S)

Patent Literature 1: JP 08-104950 A
Patent Literature 2: JP 09-256028 A
Patent Literature 3: JP 2015-74807 A
Patent Literature 4: WO2019/189858 A

### SUMMARY OF THE INVENTION

### PROBLEMS TO BE SOLVED BY THE INVENTION

However, there exist problems that cannot be solved by the above related arts.

The related art disclosed in Patent Literature 1 will be described below. It is known to the inventors that: in ferritic stainless steel containing Ti, Ti easily forms not only Ti oxide but also Ti nitride; the Ti nitride is likely to be formed around cores of oxide inclusions; and the oxide inclusions formed during the melt-production process are often covered with the Ti nitride. Accordingly, because TiN concentration in the inclusions is high, it is believed to be difficult to control the composition of the inclusions in the range of MgO concentration ≥ 80wt% in a normal denitrogenation level.

The related art disclosed in Patent Literature 2 requires that the SiO₂ concentration in the slag is controlled at a low level in order to lower the oxygen potential. Accordingly, there are much restriction on operation and cost increase factor in the related art (e.g. restriction on the use of Si alloy during a reduction step of Cr oxide usually employed in refining the stainless steel and increase in the amount of used lime for lowering the SiO₂ concentration). In addition, since there is a component(s) other than SiO₂ that increases the oxygen potential, the control over the SiO₂ concentration is insufficient for stable reduction of the oxygen potential. Furthermore, the reduction in the oxygen potential is not sufficient to stably modify the MgO·Al₂O₃ spinel into MgO.

The related art disclosed in Patent Literature 3 requires that Al in the steel is reduced as much as possible. Accordingly, Al deoxidation is unusable and deoxidation with the use of Si alloy or the like becomes requisite. However, high basicity slag is necessary to be produced in order to perform highly pure deoxidation with the use of the Si alloy. The melting point of the high basicity slag, which is high, has to be lowered by adding a slag forming agent (e.g. CaF₂ and NaF). However, much restriction is imposed on such a solution. For instance, the addition of CaF₂, NaF and the like sometimes cannot be performed in terms of environmental regulations.

An object of the related art disclosed in Patent Literature 4 is to stably provide ferritic stainless steel excellent in ridging resistance, where Mg-AI oxide such as spinel (MgO·Al₂O₃) is proactively utilized. However, it is difficult using this method to sufficiently reduce surface defects on the steel sheet derived from the inclusions.

In view of the above problems, an object of the invention is to provide a Ti-containing ferritic stainless steel that is excellent in surface condition.

### MEANS FOR SOLVING THE PROBLEM(S)

A summary of the invention, which is made in order to solve the above problems, is as follows.
[1] A ferritic stainless steel with chemical composition including, in mass%: C: 0.002 to 0.020%; Si: 0.5% or less; Mn: 0.2% or less; P: 0.04% or less; S: 0.005% or less; Cr: 10.5 to 25.0%; Al: 0.01 to 0.20%; Ti: 0.15 to 0.35%; O: 0.0001 to 0.0030%; N: 0.005 to 0.020%; Ca: 0.0030% or less; Mg: 0.008 × [%AI] or more; and a balance consisting of Fe and impurities, in which oxysulfide-containing inclusions are present in the steel, the oxysulfide-containing inclusions include inclusions whose minor axis is 3 µm or more and inclusions whose minor axis is 15 µm or more, the inclusions whose minor axis is 3 µm or more being present at a rate of 5 pieces/mm² or less and the inclusions whose minor axis is 15 µm or more being present at a rate of 0.05 pieces/mm² or less, and 75% or more of the number of the inclusions whose minor axis is 3 µm or more include an oxysulfide part whose composition satisfies formulae (1) and (2) below.

   CaO + Al₂O₃ + MgO ≥ 90% ··· formula (1)

   Al₂O₃/MgO ≤ 1.25 ··· formula (2)

   where CaO, Al₂O₃, and MgO in the formulae (1) and (2) represent mass% of respective components in the oxysulfide.
[2] The ferritic stainless steel according to [1], in which the chemical composition includes, in place of a part of the Fe, in mass%, one or both of: REM: 0.01% or less; and Ta: 0.001 to 0.10%, and 75% or more of the number of the inclusions whose minor axis is 3 µm or more include an oxysulfide part whose composition satisfies a formula (3) below, in place of the formula (1), and the formula (2).

   CaO + Al₂O₃ + MgO + ROx + Ta₂O₅ ≥ 95% ··· formula (3)

   where CaO, Al₂O₃, MgO, ROx, and Ta₂O₅ in the formula (3) represent mass% of respective components in the oxysulfide and ROx represents REM oxides.
[3] The ferritic stainless steel according to [1], in which 75% or more of the number of the inclusions whose minor axis is 3 µm or more include an oxysulfide part whose composition satisfies a formula (4) below, in addition to the formulae (1) and (2).

   CaO > 20% ··· formula (4)
[4] The ferritic stainless steel according to [2], in which 75% or more of the number of the inclusions whose minor axis is 3 µm or more include an oxysulfide part whose composition satisfies a formula (4) below, in addition to the formulae (2) and (3).

   CaO > 20% ··· formula (4)
[5] The ferritic stainless steel according to any one of [1] to [4], in which in place of the formula (2), a formula (5) below is used.

   Al₂O₃/MgO ≤ 0.75 ··· formula (5)
[6] The ferritic stainless steel according to any one of [1] to [5], in which the chemical composition further includes, in place of a part of the Fe, in mass%, one or more of: B: 0.0001 to 0.0020%; Nb: 0.1 to 0.6%; Mo: 0.1 to 2.0%; Ni: 0.1 to 2.0%; Cu: 0.01 to 2.00%; Sn: 0.01 to 0.50%; V: 0.010 to 0.20%; Sb: 0.01 to 0.30%; W: 0.05 to 1.00%; Co: 0.10 to 1.00%; Zr: 0.0001 to 0.0050%; and Ga: 0.0001 to 0.0100%.

The invention can provide a ferritic stainless steel with less surface defects on the steel sheet derived from the inclusions.

### BRIEF DESCRIPTION OF DRAWING(S)

Fig. 1 is a graph showing a ratio [%Mg]/[%Al] in molten steel and an area ratio of spinel and MgO in an area of inclusions.
Fig. 2 is an illustration showing an observation surface of the inclusions as defined by the invention and a measurement method of the size of the inclusions.

### DESCRIPTION OF EMBODIMENT(S)

The invention will be described in detail below.

It is believed that MgO·Al₂O₃ spinel causes surface defects in manufacturing stainless steel because MgO·Al₂O₃ spinel is not easily crushed/stretched during the rolling process and thus is likely to be exposed on steel surface in accordance with decrease in the thickness of the steel material. Accordingly, it is believed that the surface defects can be decreased by crushing the inclusions to reduce the size of the inclusions during the production process. A Ti-containing ferritic stainless steel A

(referred to as "steel A" hereinafter) whose oxide part of inclusions in steel is controlled to be MgO and a Ti-containing ferritic stainless steel B (referred to as "steel B" hereinafter) whose oxide part of inclusions in steel is controlled to be MgO·Al₂O₃ spinel were prepared. Test samples were produced by subjecting slabs of the steel A and the steel B to hot rolling/pickling and cold rolling. Then, the forms of the inclusions in the test samples at each of the production steps were checked. The forms of the inclusions in steel in the slabs and the steel sheet after hot rolling were substantially the same in both of the steel A and the steel B. In contrast, in the steel sheets after cold rolling, MgO in the steel A was crushed while MgO·Al₂O₃ spinel in the steel B was not crushed. The observed inclusions in steel had an oxide part covered with TiN, where crushed form of the oxide part was not affected. In view of the above, it is found that there exists a possibility to reduce the surface defects by controlling the oxide part of the inclusions in steel to be in a form of MgO to make the inclusions in steel to be easily crushed during production process, thereby restraining the inclusions in steel from being exposed on the steel sheet surface.

It should be noted that the surface defects herein refer to defects generated on the steel sheet surface. Specifically, examples of the surface defects include linear defects caused by inclusions exposed on the surface during a rolling process and the like and laminations caused by inclusions present near a top layer.

### Inclusions

In the invention, the inclusions are made of oxide, sulfide, and/or nitride, which is solely present or are present in a complex form. It should be noted that the oxide and the sulfide, which are often present in phases indistinctive from each other, are collectively referred to as an oxysulfide that includes a phase where one of the oxide and the sulfide is not contained.

Conditions for controlling the composition of the inclusions in a form of MgO will be described below.

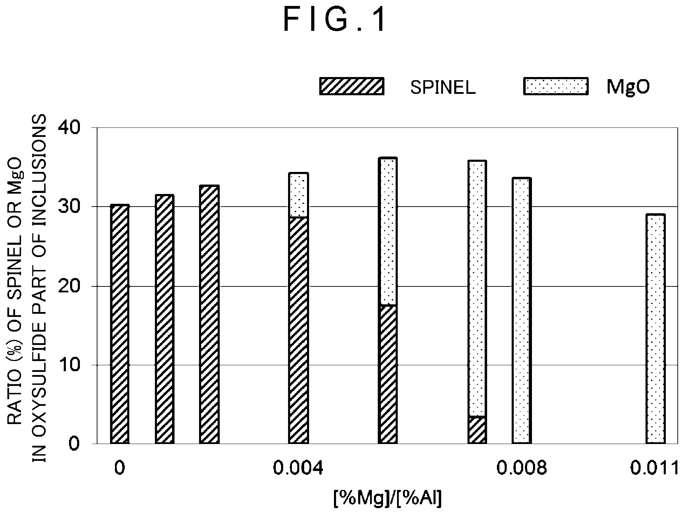

In order to keep the MgO·Al₂O₃ spinel from being crystallized in the oxide part of the inclusions in steel and to control the oxide part of the inclusions in steel in the form of MgO, it is necessary to increase Mg concentration with respect to Al concentration in molten steel. After studying a relationship between the Mg concentration with respect to the Al concentration in molten steel and crystallization phase that is present in the oxysulfide part of the inclusions in steel, it is found that MgO becomes stable when [%Mg]/[%Al] is 0.008 or more, as shown in Fig. 1. In other words, when [%Mg]/[%Al] is less than 0.008, spinel is easily crystallized and the problem of surface defects cannot be solved.

A possible solution for increasing [%Mg]/[%Al] is to add Mg alloy and the like, which, however, is unstable in yield and is not easily controlled. When Mg is not intentionally added by Mg alloy or the like, Mg is supplied into molten steel by MgO present in slag and/or refractory that is reduced by highly reductive component in the molten steel. Such phenomenon also occurs by Al when Al is used for deoxidation. Under such circumstances, it is impossible in principle to increase the Mg concentration with respect to the Al concentration. Accordingly, a means for increasing Mg concentration without increasing Al concentration is necessary.

After various studies over adverse effect on properties of steel material and availability of the material, it is found that Ti is effective. Ti, which is an element with weaker reduction power than Al, is thought to be less likely to cause reduction of MgO. However, it is found that the weakly reductive Ti can cause MgO reduction by adding Ti after controlling MgO activity in the slag at a high level to facilitate reaction, thereby increasing the Mg concentration with respect to the Al concentration. Ti, which contributes to the increase in the Mg concentration, is also usable as elements for fixing C and N at solidification. Thus, Ti causes no adverse effect unless being excessively added.

Next, some features of the invention (except for a crystallization phase) directed to the number of inclusions and composition of the oxysulfide part, which relate to the surface defects, will be described below.

Among Inclusions Including Oxysulfide, Number of Inclusions Whose Minor Axis Is 3 µm or More Is 5 Pieces/mm² or Less

Inclusions with minor axis of less than 3 µm, which are unlikely to cause surface defects, are out of the definition of the invention. When there are a large number of inclusions with 3 µm or more, the surface defects are more frequently generated. Accordingly, the upper limit is 5 pieces/mm². Preferably, the upper limit is 3 pieces/mm².

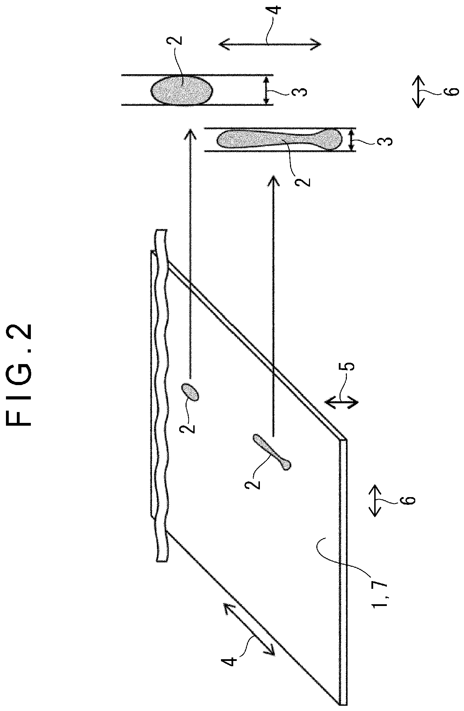

It should be noted that the minor axis 3 herein refers to a maximum diameter of inclusions 2 on an observation surface 1, which is a cross section in parallel to a rolling direction 4 and perpendicular to a thickness direction 5 (i.e. a cross section parallel to a steel sheet surface 7), in a direction perpendicular to the rolling direction 4 (sheet width direction 6) as shown in Fig. 2.

Among Inclusions Including Oxysulfide, Number of Inclusions Whose Minor Axis Is 15 µm or More Is 0.05 Pieces/mm² or Less

Even when the number of inclusions with 15 µm or more of minor axis is small, the surface defects are frequently generated if the number of the inclusions with 15 µm or more minor axis exceeds 0.05 pieces/mm². Accordingly, the upper limit of the number of inclusions with 15 µm or more of minor axis is 0.05 pieces/mm². Preferably, the upper limit is 0.03 pieces/mm².

When No REM and/or Ta Is Contained: Among Inclusions with 3 µm or More Minor Axis, Ratio of Inclusions with Oxysulfide Part Whose Composition Satisfies Formulae (1) and (2) below Is 75% or More

CaO + Al₂O₃ + MgO ≥ 90% ··· formula (1)

Al₂O₃/MgO ≤ 1.25 ··· formula (2)

It should be noted that CaO, Al₂O₃, and MgO in the formulae (1) and (2) refer to mass% of respective components in the oxysulfide.

When the oxysulfide part of the inclusions falling under the chemical composition range of the invention has a composition of CaO + Al₂O₃ + MgO < 90%, there are a large number of easily reducible oxides (e.g. SiO₂ and MnO) in the oxysulfide part to cause surface and internal defects when the steel is to be processed. Accordingly, CaO + Al₂O₃ + MgO is 90% or more.

When Al₂O₃/MgO ≤ 1.25, the crystallization phase of the oxysulfide part can be made mainly of MgO.

When the ratio of the inclusions among the inclusions with 3 µm or more minor axis that do not satisfy the two composition condition formulae (i.e. the formulae (1) and (2)) is less than 25%, the generation ratio of surface defects becomes low. Accordingly, the ratio of the inclusions satisfying the two composition conditions is 75% or more. Preferable lower limit is 85% or more.

When REM and/or Ta Are Contained: Among Inclusions with 3 µm or More Minor Axis, Ratio of Inclusions with Oxysulfide Part Whose Composition Satisfies Formula (3) below and the Formula (2) Is 75% or More

CaO + Al₂O₃ + MgO + ROx + Ta₂O₅ ≥ 95% ··· formula (3)

It should be noted that CaO, Al₂O₃, MgO, ROx, and Ta₂O₅ in the formula (3) refer to mass% of respective components in the oxysulfide.

When REM and/or Ta is contained in the chemical composition range of the invention, REM and Ta, which are elements of strong reduction power, are contained in the oxysulfide part of the inclusions. REM and Ta, which do not cause adverse effects unlike easily reducible oxides such as SiO₂ and MnO, are safely replaceable with CaO, Al₂O₃, and MgO.

When the oxysulfide part of the inclusions has a composition of CaO + Al₂O₃ + MgO + ROx + Ta₂O₅ < 95%, there are a large number of easily reducible oxides (e.g. SiO₂ and MnO) in the oxysulfide part to cause surface and internal defects when the steel is processed. Accordingly, CaO + Al₂O₃ + MgO + ROx + Ta₂O₅ is 95% or more (the formula (3)).

When Al₂O₃/MgO ≤ 1.25 (formula (2)) is satisfied, the crystallization phase of the oxysulfide part can be made mainly of MgO as in the instance without adding REM and/or Ta.

When the ratio of the inclusions among the inclusions with 3 µm or more minor axis that do not satisfy the two composition condition formulae (the formulae (3) and (2)) is less than 25%, the generation ratio of surface defects becomes low. Accordingly, the ratio of the inclusions satisfying the two composition conditions is 75% or more. Preferable lower limit is 85% or more. It should be noted that ROx, which herein is a collective term for all of REM oxides, represents a sum of concentrations of the REM oxides in the formula.

It should be noted that, since it is important in the invention to reduce MgO·Al₂O₃ spinel as much as possible, the content ratio of each of the components is not limited in the formulae (1) and (3) as long as the condition of the formula (2) is satisfied. It is necessary in, for instance, Patent Literature 4 to limit the content of CaO to be 20% or less to provide solidification nuclei of TiN. However, the invention is still workable even when the content of CaO exceeds 20%.A formula (4) indicating a preferable feature of the invention is thus provided below.

CaO > 20% ··· formula (4)

When REM and/or Ta is not added, in order to reduce MgO·Al₂O₃ spinel as much as possible, a use of a formula (5) in place of the formula (2) is more preferable. When REM and/or Ta is added, in the same manner as the instance without adding REM and/or TA, the use of the formula (5) in place of the formula (2) is also more preferable in order to reduce MgO·Al₂O₃ spinel as much as possible.

Al₂O₃/MgO ≤ 0.75 ··· formula (5)

### Steel Component

The invention, which relates to controlling the composition of the inclusions and mainly controlling Mg and Al of the components in molten steel, is applicable to typically manufactured ferritic stainless steel having Ti stabilized system. The ranges of chemical composition suitably usable in the invention will be described below. It should however be noted that the ranges are not limited thereto. In the description below, % means mass%.

### C: 0.002 to 0.020%

C, which is a component that generates Cr carbide to reduce corrosion resistance and reduces workability when being contained at a content exceeding 0.02%, is contained at a content of 0.020% or less. However, when the content is less than 0.002%, a deoxidation load after decarburization is increased to increase Al₂O₃ inclusions. Accordingly, the lower limit of C content is 0.002%.Preferably, the C content is 0.005% or more.

### Si: 0.5% or Less

Si is a component added for reducing/recycling Cr oxide generated at the time of decarburization of stainless steel. In order to achieve the effects, Si is preferably added by an amount of 0.03% or more, more preferably 0.05% or more. When the added amount of Si exceeds 0.5%, workability is reduced. Accordingly, an upper limit of Si content is 0.5% or less. Preferably, the upper limit of Si content is 0.3% or less. Si is optionally not contained.

### Mn: 0.2% or Less

Mn, which is an element contributing to deoxidation, is not necessarily added because deoxidation can be sufficiently performed by Al that is an element stronger than Mn. However, Mn may be added for preliminary deoxidation before the addition of Al. When being contained, in order to achieve the effects, Mn is preferably added by an amount of 0.01% or more, more preferably 0.05% or more. In contrast, Mn content is 0.2% or less in order to prevent deterioration in workability, preferably 0.15% or less.

### P: 0.04% or Less

The content of P, which is detrimental to stainless steel (e.g. decrease in toughness, hot workability, and corrosion resistance) and is preferably as small as possible, is 0.04% or less. Preferably, the P content is 0.03% or less. However, excessive decrease results in high load applied during refining process or requires expensive material. Accordingly, P is optionally contained by 0.005% or more in actual operations.

### S: 0.005% or Less

The content of S, which is detrimental to stainless steel (e.g. decrease in toughness, hot workability, and corrosion resistance) and is preferably as small as possible, is 0.005% or less. Preferably, the S content is 0.003% or less.

### Cr: 10.5 to 25.0%

Cr is a basic element for ensuring corrosion resistance. Accordingly, at least 10.5% or more Cr content is necessary. Preferably, the Cr content is 14.0% or more, further preferably 17.0% or more. When Cr is added by an amount exceeding 25.0%, workability is deteriorated. Accordingly, the upper limit of the Cr content is 25.0%.Preferably, the upper limit is 21.0% or less.

### Al: 0.01 to 0.20%

Al is an element necessary for deoxidation of steel. When deoxidation is insufficient, desulfurization does not progress and steel is possibly rusted from the sulfide. Thus, Al is also an element for improving corrosion resistance. Accordingly, the lower limit of the Al content is 0.01 %.Further, because appropriate deoxidation is important in order to promote the above reduction of Mg by Ti, Al is preferably added by an amount of 0.02% or more. Workability is deteriorated when Al is added by an amount exceeding 0.2%. Accordingly, the upper limit of Al is 0.2%.Preferably, the Al content is 0.12% or less.

### Ti: 0.15 to 0.35%

Ti, which is an especially important element in the invention, functions to reduce MgO in the slag to supply Mg into the molten steel. In order to achieve the effects, Ti content of 0.15% or more is necessary. Preferably, Ti is added by 0.18% or more. However, when Ti is added by an amount exceeding 0.35%, significant amount of TiN is generated to cause nozzle clogging during production process and surface defects on products. Accordingly, the upper limit of Ti content is 0.35%.Preferably, Ti content is 0.30% or less.

### O: 0.0001 to 0.0060%

The content of O, which is a primary element of inclusions that cause the surface defects, is preferably as small as possible. Accordingly, the upper limit of the O content is 0.0060%.When a large amount of O is contained in adding Ti, Ti itself is consumed by deoxidation reaction. Accordingly, in order to efficiently reduce MgO by Ti, the upper limit of O is preferably 0.0030%.More preferably, the upper limit of O is 0.0020%.It is expensive to reduce the O amount to less than 0.0001%. Accordingly, the lower limit of O is 0.0001%.Preferable lower limit is 0.0005% or more.

### N: 0.005 to 0.020%

N, which is an element useful for ensuring strength and corrosion resistance, causes grain-boundary corrosion due to sensitization when being added by an amount exceeding 0.020%. Accordingly, N content is 0.020% or less. Preferably, the N content is 0.015% or less. Excessive decrease in the N content requires increase in refining load and consequent increase in production cost. Accordingly, the N content is 0.005% or more.

### Ca: 0.0030% or Less

When Ca concentration exceeds 0.0030%, CaS is generated to deteriorate corrosion resistance. Accordingly, an upper limit of Ca is 0.0030%.Preferably, the upper limit is 0.0020% or less. Ca, which is not necessarily added, is optionally added in a form of Ca alloy (e.g. CaSi and NiCa) in the above concentration range in order to increase CaO concentration in the oxysulfide.

### Mg: 0.008 × [%AI] or More

Mg is a constituent element of MgO·Al₂O₃ spinel and MgO. However, which one of MgO·Al₂O₃ spinel and MgO is crystallized in the oxide part of inclusions is determined by a ratio between Mg concentration ([%Mg]) and Al concentration ([%Al]) in steel. When [%Mg] is smaller than 0.008 × [%AI], MgO is not stably crystallized. Accordingly, lower limit of [%Mg] is 0.008 × [%AI] or more. Preferably, the lower limit of [%Mg] is 0.012 × [%AI] or more. Further preferably, the lower limit of [%Mg] is 0.0005% or more. In contrast, the content of Mg, which deteriorates corrosion resistance when being excessively added, is preferably 0.0030% or less. The Mg content is more preferably 0.0027% or less, further preferably 0.0024% or less.

The balance of the above steel components is Fe and impurities. The impurities refer to components that are mixed in industrial production process of steel from raw materials (e.g. ore and scrap steel) and by various factors during the production process and are in a permissible range not causing adverse effects on the invention.

It should be noted that the chemical composition of the ferritic stainless steel with excellent surface condition according to the present exemplary embodiment optionally includes one or both of REM: 0.01% or less and Ta: 0.001 to 0.100% (in mass%) in place of a part of Fe. The lower limit of these elements when these elements are not contained is 0%.

### REM: 0.01% or Less

REM (Rare-Earth Metal), which is highly compatible with O, can reduce the amount of MgO·Al₂O₃ spinel that causes surface defects. However, when REM is contained by an amount exceeding 0.01%, REM can cause nozzle clogging during casting process. Accordingly, the upper limit of REM content is 0.01% or less. It should be noted that REM refers to total seventeen elements consisting of Sc, Y, and lanthanoids and REM content means a sum of contents of these seventeen elements.

### Ta: 0.001 to 0.100%

Ta, which is highly compatible with O, can reduce the amount of MgO·Al₂O₃ spinel that causes surface defects. In order to achieve the advantage, it is necessary to add Ta by an amount of 0.001% or more. However, when Ta is contained by an amount exceeding 0.100%, Ta can reduce normal-temperature ductility and/or toughness. Accordingly, the upper limit of Ta content is 0.100%.

Further optionally, the chemical composition of the ferritic stainless steel excellent in surface condition according to the present exemplary embodiment contains, in place of a part of Fe and in mass%, one or more of B: 0.0001 to 0.0020%, Nb: 0.1 to 0.6%, Mo: 0.1 to 2.0%, Ni: 0.1 to 2.0%, Cu: 0.01 to 2.00%, Sn: 0.01 to 0.50%, V: 0.010 to 0.200%, Sb: 0.01 to 0.30%, W: 0.05 to 1.00%, Co: 0.10 to 1.00%, Zr: 0.0001 to 0.0050%, and Ga: 0.0001 to 0.0100%.When these elements are not contained, the lower limit of these elements is 0%.

### B: 0.0001 to 0.0020%

B, which is an element that enhances strength of grain boundary, contributes to improvement in workability. When being contained, in order to achieve the effects, the B content is preferably 0.0001% or more, more preferably 0.0005% or more. In contrast, when B is excessively added, B deteriorates ductility and, consequently, workability. Accordingly, the B content is preferably 0.0020% or less, more preferably 0.0010% or less.

### Nb: 0.1 to 0.6%

Nb has a function of enhancing moldability and corrosion resistance. In order to achieve the above effects, it is necessary for Nb to be contained by 0.1% or more. In contrast, when Nb is added by an amount exceeding 0.6%, recrystallization does not easily occur to coarsen the structure. Accordingly, the upper limit of Nb is 0.6%.

### Mo: 0.1 to 2.0%

Mo has a function of enhancing corrosion resistance. In order to achieve the above effects, it is necessary to for Mo to be contained by 0.1% or more. In contrast, when Mo is excessively contained, the sigma phase is generated to deteriorate workability. Accordingly, the upper limit of Mo content is 2.0%.

### Ni: 0.1 to 2.0%

Ni, which has a function of enhancing corrosion resistance, is optionally added by an amount ranging from 0.1 to 2.0%.Ni added by an amount exceeding 2.0% results in increase in production cost. Accordingly, the Ni content is 2.0% or less.

### Cu: 0.01 to 2.00%

Cu, which has a function for enhancing corrosion resistance, is optionally added by an amount ranging from 0.01 to 2.00%.Cu added by an amount exceeding 2.00% possibly results in embrittlement of the steel. Accordingly, the Cu content is 2.00% or less.

### Sn: 0.01 to 0.50%

When being added, Sn enhances the high corrosion resistance of stainless steel. When being contained, in order to achieve the effects, Sn is preferably contained by an amount of 0.01% or more, more preferably 0.02% or more. In contrast, excessive addition of Sn results in deterioration in workability. Accordingly, the Sn content is preferably 0.50% or less, more preferably 0.30% or less.

### V: 0.010 to 0.20%

When being added, V enhances the high corrosion resistance of stainless steel. When being contained, the V content is preferably 0.010% or more in order to achieve the above effect, more preferably 0.100% or more. In contrast, when high concentration of V is contained, toughness is deteriorated. Accordingly, the upper limit of the V content is 0.200%.

### Sb: 0.01 to 0.30%

When being added, Sb enhances the high corrosion resistance of stainless steel. Accordingly, the Sb content is optionally 0.01% or more. However, it is possible that Sb promotes generation of TiN to cause surface defects. Accordingly, the upper limit of Sb is 0.30%.Preferably, the upper limit is 0.10% or less.

### W: 0.05 to 1.00%

When being added, W enhances the high corrosion resistance of stainless steel. When being contained, in order to achieve the above effect, W is preferably added by an amount of 0.05% or more, more preferably 0.25% or more. On the other hand, excessive addition of W, which is very expensive, does not produce an effect corresponding to an increase in alloy cost. Accordingly, the upper limit of W is 1.00%.

### Co: 0.10 to 1.00%

When being added, Co enhances the high corrosion resistance of stainless steel. When being contained, in order to achieve the above effect, Co is preferably added by an amount of 0.10% or more, more preferably 0.25% or more. On the other hand, excessive addition of Co, which is very expensive, does not produce an effect corresponding to an increase in alloy cost. Accordingly, the upper limit of Co is 1.00%.

### Zr: 0.0001 to 0.0050%

Zr, which has a sulfur fixation effect and thus is capable of enhancing corrosion resistance, is optionally contained by an amount of 0.0001% or more. However, since Zr is highly compatible with S, excessive addition of Zr results in formation of coarse sulfide in molten steel, thereby deteriorating corrosion resistance contrarily to expectations. Accordingly, the upper limit of the Zr content is 0.0050%.

### Ga: 0.0100% or Less

Ga, which has an effect of enhancing corrosion resistance, is optionally contained by an amount of 0.0100% or less as necessary. The lower limit of the Ga content, which is not specifically limited, is preferably 0.0001% or more for stably achieving the effect.

### Measurement Method of Inclusions

A measurement method of the inclusions will be described below. As shown in Fig. 2, a cross section of a steel sheet in a direction parallel to a rolling direction 4 and perpendicular to a thickness direction 5 (i.e. a cross section parallel to a steel sheet surface 7) is observed. The position of observation surface 1 in a depth direction of the steel sheet is located at the topmost layer as far as possible, where minimum polishing required for mirror finish for observation is applied. The observation surface 1 is analyzed by SEM-EDS to detect inclusions containing one or both of O and S. Then, the detected inclusions are identified as oxysulfide-containing inclusions. 100 or more oxysulfide-containing inclusions whose minor axis 3 (maximum diameter in the sheet width direction 6) is 3 µm or more in the observation surface 1 are selected at random to define a population. Then, the inclusions included in the population are analyzed by SEM-EDS to identify the size, composition, and number of the oxysulfide-containing inclusions. At this time, the area of the observation surface is recorded. The minor axis is used for evaluation of the size of the inclusions because, while the size in a direction parallel to the rolling direction 4, which is greatly affected by rolling reduction, is difficult to be constantly evaluated, the size (minor axis 3) in the direction (sheet width direction 6) perpendicular to the rolling direction 4 does not greatly vary even after the rolling reduction. Accordingly, it is believed that the size of the minor axis 3 of the inclusions reflects the results of control over the inclusions during the steelmaking process, which is one of key features of the invention. It should be noted that JIS G 0555, which is typically used in the evaluation method of inclusions, sometimes regards two or more distanced inclusions as a single inclusion depending on the type of the inclusions and distance therebetween. However, such distanced inclusions are regarded as separate inclusions in the invention. Further, the oxysulfide-containing inclusions selected as the population are analyzed by SEM-EDS to detect one or both of O and S, thereby identifying the "oxysulfide part of the inclusions".In respective inclusions, the contents of elements in the "oxysulfide part of inclusions" are determined by SEM-EDS analysis. Using the determined element analysis values, the contents of CaO, Al₂O₃, and MgO in the oxysulfide part of the inclusions are determined supposing that all of Ca, Al, and Mg are constituents of CaO, Al₂O₃, and MgO, respectively. All of the analyzed Ca is supposed to form CaO.

### Manufacturing Method

Next, the manufacturing method of the ferritic stainless steel of the present exemplary embodiment will be described below.

While steel whose composition is adjusted to the above-described composition is melt-produced, the steel is deoxidized by Al at an initial phase of the secondary refining to set O concentration in molten steel at 0.005% or less. At this time, preliminary deoxidation is optionally applied by Si and/or Mn prior to Al. By reducing the O concentration to 0.005% or less at the initial phase, the number of the inclusions with 3 µm or more minor axis and inclusions with 15 µm or more minor axis in the product can be controlled at or less than the predetermined level.

Subsequently, Ti is added in a later stage of the secondary refining and the molten steel is stirred for homogenization. When the O concentration in molten steel is higher than 0.003% prior to adding Ti due to reoxidation during the secondary refining or the like, the steel is deoxidized again by Al prior to adding Ti. It should however be noted that Ta and/or REM is optionally added before the addition of Ti, after the addition of Ti, or before and after the addition of Ti. The addition of Ta and/or REM, when performed before the addition of Ti, can replace the secondary addition of Al. By controlling the O concentration in the range of 0.003% or less before adding Ti, the effect for increasing the Mg concentration by adding Ti can be efficiently achieved, thereby allowing the composition of inclusions to be controlled to the composition as shown in the formula (1) or the formula (3). It should be noted that it is only necessary for the O concentration to be 0.003% at the time of adding Ti. In other words, the effect for increasing Mg concentration by the addition of Ti is not affected even when the O concentration exceeds 0.0030% after the addition of Ti due to, for instance, reoxidation or the like.

Further, in order to increase the Mg concentration in the molten steel by Ti and control the inclusions in the steel within the range defined by the invention, MgO activity in the slag is preferably as high as possible. Though being incapable of unambiguously determined in view of the relationship with other components, the MgO activity is preferably approximately 0.9 or more in terms of pure solid MgO. At this time, since it is difficult to measure the MgO activity in the slag during operation, the composition of the slag is optionally measured to calculate the MgO activity in the slag using thermodynamic data and/or commercially available thermodynamic calculation software. When the MgO activity in the slag is less than 0.9 in terms of pure solid MgO, some measures have to be taken in order to increase the MgO activity. There are various measures for increasing the MgO activity, an example of which is addition of CaO and/or MgO. The Mg concentration in the molten steel can thus be stably controlled at or more than a predetermined level, thereby allowing the composition of the inclusions to be in the range defined by the formula (2).

Further, the Mg concentration in the molten steel is high in a non-equilibrium manner by stirring at the time of adding Ti, so that Al₂O₃/MgO in the oxysulfide part of the inclusions can be lowered when the time from stirring at the time of addition of Ti to the completion of casting is short. In order to reduce MgO·Al₂O₃ spinel as much as possible, the time from stirring at the time of addition of Ti to the completion of casting is preferably 150 minutes or less in order to satisfy the formula (5).

In order to satisfy the conditions of: (1) the number of the oxysulfide-containing inclusions whose minor axis is 3 µm or more is 5 pieces/mm² or less, (2) the number of the oxysulfide-containing inclusions whose minor axis is 15 µm or more is 0.05 pieces/mm² or less, and (3) the number ratio of the inclusions whose minor axis is 3 µm or more and whose composition of the oxysulfide part satisfies at least one of the formula (1) or (3) and the formula (2) is 75% or more, it is necessary that the Mg content (%) in the steel satisfies Mg: 0.008 × [%AI] or more and the MgO activity in the slag is approximately 0.9 or more in terms of pure solid MgO. In addition thereto, by controlling the above time until casting is completed, the number ratio of the inclusions satisfying at least one of the formula (1) or (3) and the formula (5) can be made to be 75% or more.

### Examples

### Example 1

During melt-production of ferritic stainless steel, deoxidation by Al or the like, slag adjustment, and Ti addition were performed in the secondary refining process to control the components and the amount, composition, and size of the inclusions for melt-production. Specifically, Al deoxidation was performed at an initial phase of the secondary refining to lower the O concentration in the molten steel to 0.005% or less. Further, at a later phase of the secondary refining, the O concentration was controlled to be 0.003% or less before adding Ti. The MgO activity in the slag was calculated using commercially available thermodynamic equilibrium calculation software FactSage based on the composition of the slag. Then, the slag composition was controlled so that the MgO activity in the slag became 0.9 or more in terms of pure solid MgO. Table 1 shows chemical composition. Table 2 shows the nature of the inclusions and quality evaluation result. The numerical values outside the scope of the invention are underlined.

It should be noted that the above O control was not performed in Comparative b1.

**Table 1**

| Steel No. | Chemical Composition (mass%) | | | | | | | | | | | | | | | Mg/Al |
|---|---|---|---|---|---|---|---|---|---|---|---|---|---|---|---|---|
| | C | Si | Mn | P | S | Cr | Al | Ti | O | N | Ca | Mg | REM | Ta | Other(s) | |
| A1 | 0.0125 | 0.34 | 0.15 | 0.023 | 0.0018 | 24.5 | 0.192 | 0.343 | 0.0007 | 0.009 | 0.0014 | 0.0030 | | | Mo:1.2, Cu:0.02 | 0.0156 |
| A2 | 0.0071 | 0.07 | 0.18 | 0.038 | 0.0044 | 23.4 | 0.149 | 0.154 | 0.0012 | 0.015 | 0.0013 | 0.0014 | | | Ni:0.3 | 0.0094 |
| A3 | 0.0030 | 0.04 | 0.12 | 0.033 | 0.0016 | 19.0 | 0.179 | 0.274 | 0.0005 | 0.006 | 0.0001 | 0.0015 | | | Nb:0.14 | 0.0084 |
| A4 | 0.0021 | 0.22 | 0.06 | 0.039 | 0.0028 | 10.7 | 0.097 | 0.279 | 0.0013 | 0.019 | 0.0028 | 0.0014 | | | | 0.0144 |
| A5 | 0.0121 | 0.06 | 0.05 | 0.028 | 0.0008 | 21.3 | 0.121 | 0.211 | 0.0011 | 0.011 | 0.0006 | 0.0015 | | | Ni:0.3 | 0.0124 |
| A6 | 0.0090 | 0.07 | 0.04 | 0.026 | 0.0006 | 17.5 | 0.093 | 0.189 | 0.0014 | 0.009 | 0.0002 | 0.0012 | | | Ni:0.2 | 0.0129 |
| A7 | 0.0164 | 0.37 | 0.17 | 0.032 | 0.0028 | 23.7 | 0.096 | 0.233 | 0.0002 | 0.014 | 0.0020 | 0.0019 | 0.0022 | 0.03 | Nb:0.57, Mo:0.2 | 0.0198 |
| A8 | 0.0135 | 0.04 | 0.18 | 0.020 | 0.0032 | 13.7 | 0.020 | 0.342 | 0.0026 | 0.019 | 0.0015 | 0.0018 | 0.0097 | 0.09 | | 0.0900 |
| A9 | 0.0180 | 0.48 | 0.08 | 0.017 | 0.0011 | 11.2 | 0.120 | 0.251 | 0.0014 | 0.010 | 0.0003 | 0.0019 | 0.0008 | 0.09 | Mo:1.8, Ni:1.4, Cu:1.80 | 0.0158 |
| A10 | 0.0196 | 0.22 | 0.18 | 0.033 | 0.0031 | 16.0 | 0.105 | 0.287 | 0.0015 | 0.014 | 0.0010 | 0.0013 | | 0.03 | Nb:0.25, Ni:1.8, Cu:1.18 | 0.0124 |
| A11 | 0.0043 | 0.33 | 0.17 | 0.017 | 0.0047 | 15.2 | 0.013 | 0.202 | 0.0028 | 0.005 | 0.0024 | 0.0008 | 0.0012 | 0.05 | Nb:0.42, Mo:0.9 | 0.0615 |
| A12 | 0.012 | 0.29 | 0.03 | 0.019 | 0.0049 | 13.3 | 0.027 | 0.243 | 0.0023 | 0.016 | 0.0015 | 0.0014 | | 0.01 | Sn:0.16, Sb:0.27, B:0.0005 | 0.0519 |
| A13 | 0.0120 | 0.36 | 0.13 | 0.023 | 0.0041 | 23.3 | 0.139 | 0.273 | 0.0016 | 0.018 | 0.0030 | 0.0014 | 0.0036 | | Sn:0.21, Co:0.91, Zr:0.0018 | 0.0101 |
| A14 | 0.004 | 0.12 | 0.14 | 0.033 | 0.0009 | 12.8 | 0.120 | 0.273 | 0.0016 | 0.011 | 0.0023 | 0.0028 | | | W:0.24, Zr:0.0030, Ga:0.0049 | 0.0233 |
| A15 | 0.016 | 0.39 | 0.08 | 0.037 | 0.0014 | 13.5 | 0.173 | 0.160 | 0.0009 | 0.009 | 0.0005 | 0.0020 | | 0.05 | V:0.18, Co:0.71, B:0.0019 | 0.0116 |
| a1 | 0.0074 | 0.77 | 0.07 | 0.036 | 0.0040 | 20.3 | 0.053 | 0.008 | 0.0062 | 0.015 | 0.0001 | 0.0003 | | | Nb:0.5, Ni:0.5 | 0.0057 |
| a2 | 0.0036 | 0.42 | 0.10 | 0.034 | 0.0020 | 27.3 | 0.313 | 0.239 | 0.0009 | 0.035 | 0.0009 | 0.0021 | | | Ni:0.6 | 0.0067 |
| a3 | 0.0230 | 0.11 | 0.51 | 0.060 | 0.0045 | 12.1 | 0.175 | 0.443 | 0.0029 | 0.014 | 0.0030 | 0.0011 | 0.0006 | | Cu:0.11 | 0.0063 |
| a4 | 0.0134 | 0.34 | 0.09 | 0.036 | 0.0089 | 16.1 | 0.150 | 0.220 | 0.0019 | 0.012 | 0.0041 | 0.0009 | 0.0012 | | Nb:0.51, Cu:0.54 | 0.0060 |

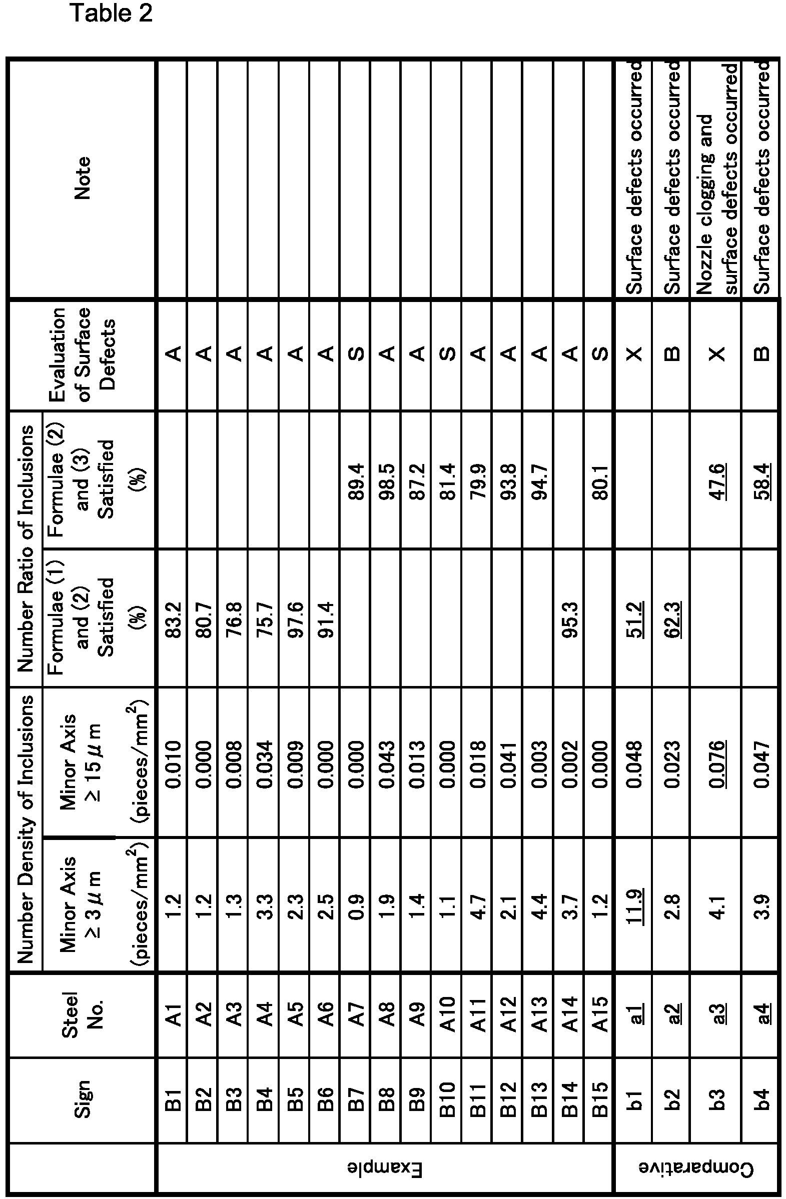

The molten steel having the components shown in Table 1 was cast using a continuous casting machine. Obtained slab was subjected to hot rolling, hot annealing/pickling, cold rolling, and annealing/pickling to produce a 1.0-mm thick cold rolled steel sheet, which was subjected to measurement of the inclusions and quality evaluation of the surface defects. It should be noted that the time from the stirring after the addition of Ti to completion of casting was in a range from 100 to 240 minutes.

During the measurement of the inclusions, as shown in Fig. 2, one hundred or more oxysulfide-containing inclusions 2 with 3 µm or more minor axis 3 were selected at random in the observation surface 1 defined on a cross section parallel to the rolling direction 4 and perpendicular to the thickness direction 5 (i.e. a cross section parallel to the steel sheet surface 7), where the minor axis was measured and composition of the oxysulfide part was evaluated. At this time, the measurement area was recorded to calculate the number of inclusions per a unit area. In evaluating the quality of the surface defects, the entire length of the obtained cold rolled steel sheet was sectioned by 1-meter intervals and was visually checked to determine a ratio of an area having a 10-mm or more surface defect to a total area. The ratio of less than 1% was rated S, the ratio in a range from 1 to 2% was rated A, the ratio in a range from 2 to 5% was rated B, and the ratio of more than 5% was rated X. As shown in Table 2, the signs B1 to B15, which satisfied conditions of the invention with regard to the steel components and amount, composition, and size of the inclusions, were evaluated to be excellent in terms of the surface defects.

The sign b1 contained a large amount of Si and thus was low in workability. Further, in the sign b1, which contained high concentration of O, small amount of added Ti, and small concentration of Mg, a large amount of inclusions not satisfying the conditions of the invention was produced, thereby causing the surface defects.

The sign b2 contained a large amount of Cr and Al and thus was low in workability. Further, in the sign b2, which contained a large amount of N, grain-boundary corrosion was caused due to sensitization. In addition, in the sign b2, the concentration ratio between Mg and Al was low and there were the inclusions not satisfying the conditions of the invention, causing the surface defects.

In the sign b3, which contained high concentration of Ti, a large amount of TiN was generated to cause nozzle clogging. Accordingly, the casting process was aborted. The obtained slab was machined at lab scale to prepare a sample. After evaluating the sample, it was found that the sample had inclusions and TiN not satisfying the conditions of the invention and surface defects were caused.

The sign b4 contained high concentration of S and Ca, where CaS was generated to possibly cause corrosion. Further, in the sign b4, the concentration ratio between Mg and Al was low and there were inclusions not satisfying the conditions of the invention, causing the surface defects.

### Example 2

As in Example 1, the secondary refining, continuous casting, hot rolling, and cold rolling were performed. At this time, the MgO activity in the slag was controlled to be in a range from 0.4 to 1.0 in terms of pure solid MgO. Table 3 shows chemical composition. Table 4 shows the MgO activity in the slag, the nature of the inclusions and quality evaluation result. The MgO activity in the slag was calculated using the thermodynamic equilibrium calculation software FactSage based on the composition of the slag. When the MgO activity was less than 0.9, in order to set the Mg concentration in the steel to 0.008 × Al or more, metal Mg was added in the steel. In all of the samples of Table 3, the composition of components, including the Mg concentration, is within the scope of the invention. In contrast, the MgO activity in the slag shown in Table 4, which is 0.9 or more in Examples D1 to D2, is less than 0.9 in Comparatives d1 to d2. As a result, while Examples, whose nature of the inclusions was within the scope of the invention, was excellent in quality, Comparatives, whose nature of inclusions was partly out of the scope of the invention, was poor in quality.

**Table 3**

| Steel No. | Chemical Composition (mass%) | | | | | | | | | | | | | | | Mg/AI |
|---|---|---|---|---|---|---|---|---|---|---|---|---|---|---|---|---|
| | C | Si | Mn | P | S | Cr | Al | Ti | O | N | Ca | Mg | REM | Ta | Others | |
| C1 | 0.0140 | 0.33 | 0.16 | 0.021 | 0.0049 | 10.8 | 0.166 | 0.212 | 0.0017 | 0.018 | 0.0007 | 0.0025 | | | Co:0.05, B:0.0004 | 0.0151 |
| C2 | 0.0137 | 0.28 | 0.16 | 0.033 | 0.004 | 23.8 | 0.195 | 0.248 | 0.0005 | 0.014 | 0.0027 | 0.0018 | | | Cu:0.7,Co:0.16,Ga:0.007 | 0.0092 |
| c1 | 0.0066 | 0.17 | 0.05 | 0.019 | 0.0015 | 16.0 | 0.120 | 0.277 | 0.0012 | 0.012 | 0.0007 | 0.0015 | | 0.1 | B:0.0002 | 0.0125 |
| c2 | 0.0062 | 0.31 | 0.19 | 0.019 | 0.0049 | 20.3 | 0.091 | 0.283 | 0.0027 | 0.006 | 0.0023 | 0.0010 | | | Ni:0.5,Sn:0.46,V:0.2 | 0.0110 |

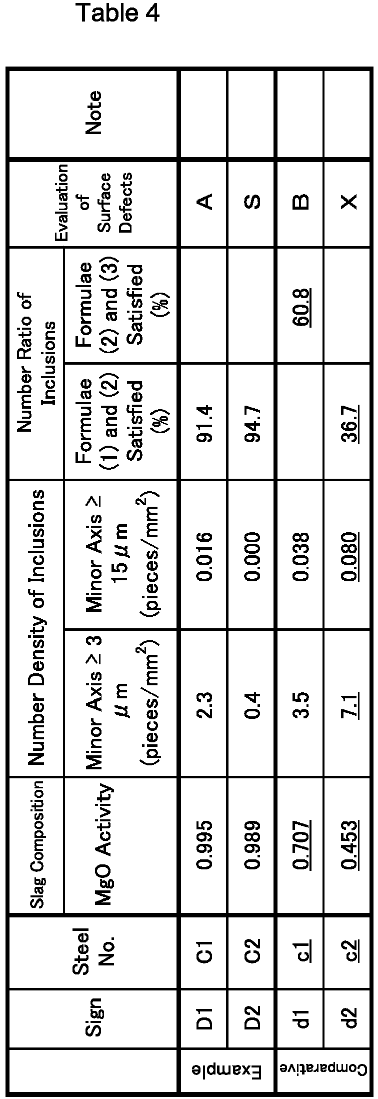

### Example 3

As in Example 1, secondary refining, continuous casting, hot rolling, and cold rolling were performed. At this time, Ca alloy was added to increase the CaO concentration in the inclusions. Table 5 shows chemical composition. Table 6 shows the MgO activity in the slag, the nature of the inclusions and quality evaluation result. The MgO activity in the slag was calculated in the same manner as in Example 2 described above. In all of the samples of Table 5, the composition of components is within the scope of the invention. With regard to the number ratio of the inclusions shown in Table 6, excellent quality was achieved when the number ratio of inclusions satisfying the formula (4) in addition to the formulae (1) and (2) or the formulae (2) and (3) was 75% or more.

**Table 5**

| Steel No. | Chemical Composition (mass%) | | | | | | | | | | | | | | | Mg/Al |
|---|---|---|---|---|---|---|---|---|---|---|---|---|---|---|---|---|
| | C | Si | Mn | P | S | Cr | Al | Ti | O | N | Ca | Mg | REM | Ta | Others | |
| E1 | 0.0029 | 0.41 | 0.10 | 0.039 | 0.0002 | 14.6 | 0.123 | 0.296 | 0.0044 | 0.015 | 0.0019 | 0.0021 | 0.0026 | 0.02 | Nb:0.41, Sb:0.18 | 0.0171 |
| E2 | 0.019 | 0.49 | 0.11 | 0.016 | 0.0027 | 18.3 | 0.153 | 0.202 | 0.0029 | 0.011 | 0.0018 | 0.0026 | | | Ga:0.002 | 0.0170 |
| E3 | 0.0188 | 0.20 | 0.10 | 0.034 | 0.0038 | 22.5 | 0.155 | 0.280 | 0.0012 | 0.018 | 0.0014 | 0.0029 | | | Ni:1.3, V:0.09, W:0.33 | 0.0187 |
| E4 | 0.0180 | 0.29 | 0.13 | 0.029 | 0.0011 | 10.6 | 0.013 | 0.349 | 0.0030 | 0.009 | 0.0009 | 0.0020 | 0.0014 | | Mo:0.13, Cu:0.69 | 0.1538 |

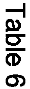

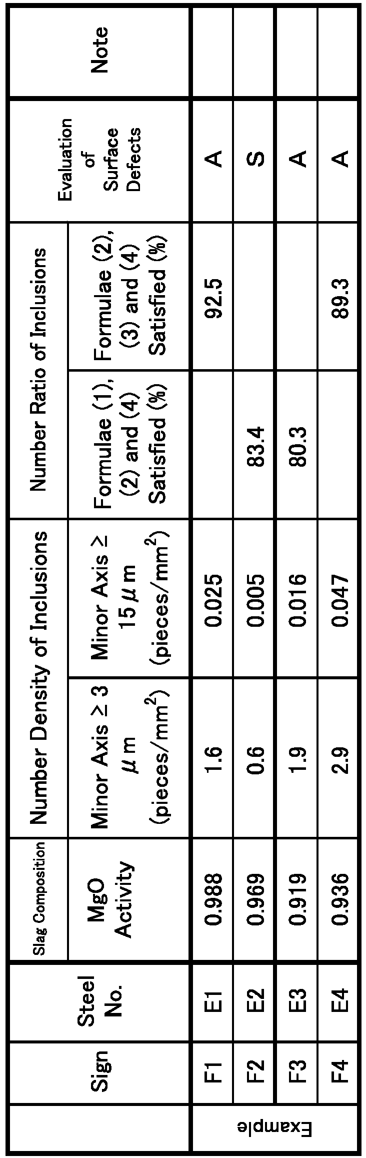

### Example 4

As in Example 1, secondary refining, continuous casting, hot rolling, and cold rolling were performed. The time from stirring after the addition of Ti during the secondary refining to completion of the continuous casting was controlled to be in a range from 90 to 240 minutes. Table 7 shows chemical composition. Table 8 shows the MgO activity in the slag, time until the completion of casting, the nature of the inclusions and quality evaluation result. The MgO activity in the slag was calculated in the same manner as in Example 2 described above. In all of the samples of Table 7, the components are within the scope of the invention. With regard to the number ratio of the inclusions shown in Table 8, excellent quality was achieved by all of the samples whose number ratio of inclusions satisfying the formulae (1) and (2) or the formulae (2) and (3) was 75% or more. Further excellent quality was achieved by H1 and H2, where the time until the completion of casting was 150 minutes or less and, in addition, the number ratio of inclusions satisfying the formulae (1) and (5) or the formulae (3) and (5) was 75% or more.

**Table 7**

| Steel No. | Chemical Composition (mass%) | | | | | | | | | | | | | | | Mg/Al |
|---|---|---|---|---|---|---|---|---|---|---|---|---|---|---|---|---|
| | C | Si | Mn | P | S | Cr | Al | Ti | O | N | Ca | Mg | REM | Ta | Others | |
| G1 | 0.0044 | 0.27 | 0.16 | 0.019 | 0.0038 | 13.3 | 0.090 | 0.283 | 0.0034 | 0.007 | 0.0013 | 0.0026 | | | Ni:0.7, Cu:0.33, B:0.0004 | 0.0289 |
| G2 | 0.0065 | 0.07 | 0.11 | 0.033 | 0.0019 | 22.4 | 0.053 | 0.344 | 0.0043 | 0.01 | 0.0025 | 0.0026 | 0.0091 | | Sb:0.19, B:0.0005 | 0.0491 |
| G3 | 0.0088 | 0.21 | 0.01 | 0.024 | 0.0025 | 16.6 | 0.032 | 0.284 | 0.0053 | 0.018 | 0.0012 | 0.0023 | 0.008 | | Nb:0.4, Sn:0.32, W:0.32, B:0.0014 | 0.0719 |
| G4 | 0.0176 | 0.11 | 0.02 | 0.023 | 0.0012 | 23.2 | 0.065 | 0.271 | 0.0045 | 0.013 | 0.0004 | 0.0010 | | 0.09 | Mo:0.14, V:0.15, Co:0.72, Ga:0.0095 | 0.0154 |

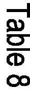

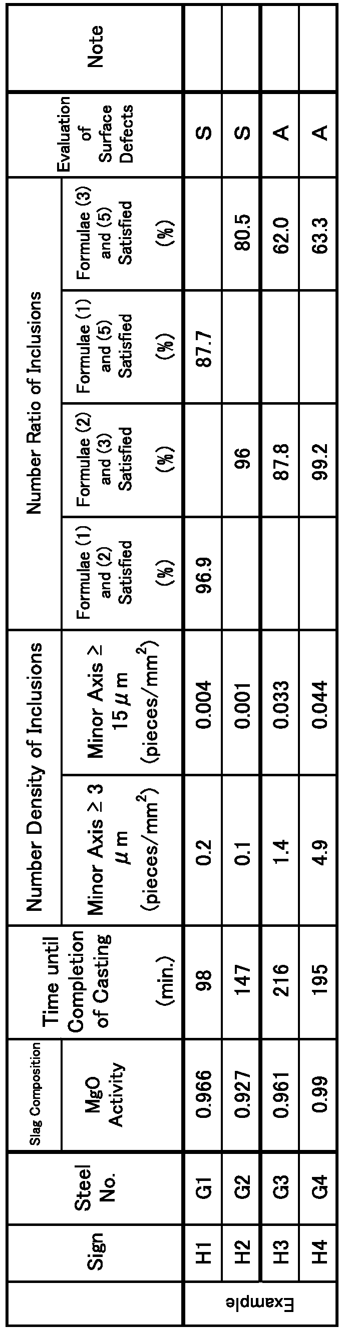

The steel according to the invention is applicable to various industrial products such as automobiles and electrical appliances. The steel of the invention is especially suitable for highly designed industrial products.

### EXPLANATION OF CODES

- 1: observation surface
- 2: inclusions
- 3: minor axis
- 4: rolling direction
- 5: thickness direction
- 6: sheet width direction
- 7: steel sheet surface

## Claims

1. A ferritic stainless steel with chemical composition comprising, in mass%:
C: 0.002 to 0.020%;
Si: 0.5% or less;
Mn: 0.2% or less;
P: 0.04% or less;
S: 0.005% or less;
Cr: 10.5 to 25.0%;
Al: 0.01 to 0.20%;
Ti: 0.15 to 0.35%;
O: 0.0001 to 0.0060%;
N: 0.005 to 0.020%;
Ca: 0.0030% or less;
Mg: 0.008 × [%AI] or more; and
a balance consisting of Fe and impurities, wherein
oxysulfide-containing inclusions are present in the steel, the oxysulfide-containing inclusions comprise inclusions whose minor axis is 3 µm or more and inclusions whose minor axis is 15 µm or more, the inclusions whose minor axis is 3 µm or more being present at a rate of 5 pieces/mm² or less and the inclusions whose minor axis is 15 µm or more being present at a rate of 0.05 pieces/mm² or less, and
75% or more of the number of the inclusions whose minor axis is 3 µm or more comprise an oxysulfide part whose composition satisfies formulae (1) and (2) below,
CaO + Al₂O₃ + MgO ≥ 90% ··· formula (1),
Al₂O₃/MgO ≤ 1.25 ··· formula (2),
wherein CaO, Al₂O₃, and MgO in the formulae (1) and (2) represent mass% of respective components in the oxysulfide.

2. The ferritic stainless steel according to claim 1, wherein the chemical composition comprises, in place of a part of the Fe, in mass%, one or both of:
REM: 0.01% or less; and
Ta: 0.001 to 0.100%, and
75% or more of the number of the inclusions whose minor axis is 3 µm or more comprise an oxysulfide part whose composition satisfies a formula (3) below, in place of the formula (1), and the formula (2),
CaO + Al₂O₃ + MgO + ROx + Ta₂O₅ ≥ 95% ··· formula (3),
wherein CaO, Al₂O₃, MgO, ROx, and Ta₂O₅ in the formula (3) represent mass% of respective components in the oxysulfide.

3. The ferritic stainless steel according to claim 1, wherein 75% or more of the number of the inclusions whose minor axis is 3 µm or more comprise an oxysulfide part whose composition satisfies a formula (4) below, in addition to the formulae (1) and (2),
CaO > 20% ··· formula (4).

4. The ferritic stainless steel according to claim 2, wherein 75% or more of the number of the inclusions whose minor axis is 3 µm or more comprise an oxysulfide part whose composition satisfies a formula (4) below, in addition to the formulae (2) and (3),
CaO > 20% ·· ·formula (4).

5. The ferritic stainless steel according to any one of claims 1 to 4, wherein in place of the formula (2), a formula (5) below is used,
Al₂O₃/MgO ≤ 0.75 ··· formula (5).

6. The ferritic stainless steel according to any one of claims 1 to 5, wherein the chemical composition further comprises, in place of a part of the Fe, in mass%, one or more of:
B: 0.0001 to 0.0020%;
Nb: 0.1 to 0.6%;
Mo: 0.1 to 2.0%;
Ni: 0.1 to 2.0%;
Cu: 0.01 to 2.0%;
Sn: 0.01 to 0.50%;
V: 0.010 to 0.200%;
Sb: 0.01 to 0.30%;
W: 0.05 to 1.00%;
Co: 0.10 to 1.00%;
Zr: 0.0001 to 0.0050%; and
Ga: 0.0001 to 0.0100%.
